# EUROPEAN PATENT SPECIFICATION

(11) **EP 4 339 471 B1**
(45) Date of publication and mention of the grant of the patent: **28.01.2026**
(21) Application number: 23197894.1
(22) Date of filing: 18.09.2023
(51) Int. Cl.: F16D 3/72, F16D 3/79

(54) **FLEXIBLE METALLIC DRIVE SHAFT DIAPHRAGM HAVING ENHANCED DAMAGE TOLERANCE**
FLEXIBLE METALLISCHE ANTRIEBSWELLENMEMBRAN MIT VERBESSERTER SCHADENSTOLERANZ
DIAPHRAGME D'ARBRE D'ENTRAÎNEMENT MÉTALLIQUE FLEXIBLE PRÉSENTANT UNE TOLÉRANCE AUX DOMMAGES AMÉLIORÉE

(30) Priority: 19.09.2022 US 202217947447
(43) Date of publication of application: 20.03.2024
(73) Proprietor: Goodrich Corporation, Charlotte, NC 28217-4578 (US)
(72) Inventor: GURVICH, Mark R., Middletown, CT, 06457 (US); SCHAEFER, Joyel, Earlville, NY, 13332 (US); KING, Michael J., Sauquoit, NY, 13456 (US); REED, Brayton, New York Mills, NY, 13417 (US)
(74) Representative: Dehns

(56) References cited:
- EP-A1- 3 287 654
- GB-A- 2 181 515
- US-A- 3 041 857
- US-A- 4 203 304
- US-A- 5 364 309

## Description

### BACKGROUND

Exemplary embodiments pertain to the art of drive shafts and, more particularly, to a flexible metallic drive shaft diaphragm having enhanced damage tolerance.

In certain installations, multiple drive shafts are employed to connect an engine to a tail rotor in a rotary wing aircraft. The drives shafts are connected one to another by flexible diaphragm couplers. The flexible diaphragm couplers are formed from multiple metallic plates that are welded together. Each plate includes a central hub and an outer annular edge. The central hub of one plate may be joined to a central hub of an adjacent plate by and the outer annular edge of the adjacent plate may be joined to an outer annular edge of another adjacent plate.

In certain installations, the central hubs and annular plates were joined by mechanical fasteners. Overtime, stresses imposed by operation of the drive shaft would create fractures in the mechanical fasteners that lead to failure of the diaphragm. In other installations, the central hubs and annular edges were joined by welds. Over time, the welds experience wear due to stresses imposed by operation of the drive shaft. The wear, over time, may transform into a crack. Over time, and with continual exposure to operational stresses, the crack may propagate leading to failure of the diaphragm. Therefore, to avoid damage in such flexible diaphragm couplings, the welded joints require exceptional quality with associated additional costs and labor. Thus, designs of the flexible drive shaft diaphragms with enhanced damage tolerance or/and reduced quality requirements are needed. US 3,041,857 describes flexible couplings. US 4,203,304 describes a flexible shaft coupling. US 5,364,309 describes a resilient membrane coupling element. EP 3 287 654 A1 describes flexible coupling arrangements. GB 2 181 515 A describes a torque-transmitting coupling arrangement.

### BRIEF DESCRIPTION

A flexible diaphragm coupler is defined in claim 1 including a first flange having a first central support and a first flange element extending radially outwardly from the first central support. The first flange element includes a first rim portion having a first axially facing surface and a second axially facing surface. The second axially facing surface includes a first plurality of interlock elements. A second flange has a second central support axially selectively aligned with the first central support and a second flange element extending radially outwardly from the second central support. The second flange element includes a second rim portion having a first axially facing surface section and a second axially facing surface section. The first axially facing surface section includes a second plurality of interlock elements. A diaphragm member is disposed between the first flange and the second flange. The diaphragm member includes a first diaphragm element connected with a second diaphragm element. The first diaphragm element includes a first central support element and a first disc member extending radially outwardly from the first central support element and the second diaphragm element including a second central support element and a second disc member extending radially outwardly from the second central support element. The first disc member includes a first rim element having a first axially facing surface portion and a second axially facing surface portion. The first axially facing surface portion includes a plurality of interlock members that connect with the first plurality of interlock elements. The second disc member includes a second rim element having a third axially facing surface portion and a fourth axially facing surface portion. The fourth axially facing surface portion includes a second plurality of interlock members that connect with the second plurality of interlock elements.

According to the present invention, one of the first plurality of interlock elements and the first plurality of interlock members includes a first curvilinear profile and the other of the first plurality of interlock elements and the first plurality of interlock members includes a second curvilinear profile that matches with the first curvilinear profile.

Additionally, or alternatively, in this or other non-limiting examples, the first curvilinear profile comprises a first sinusoidal profile and the second curvilinear profile comprises a second matching sinusoidal profile.

Additionally, or alternatively, in this or other non-limiting examples, one of the first plurality of interlock elements and the first plurality of interlock members includes a first sawtooth profile and the other of the first plurality of interlock elements and the first plurality of interlock members includes a second sawtooth profile that matches with the first sawtooth profile.

Additionally, or alternatively, in this or other non-limiting examples, the first sawtooth profile includes a plurality of sawtooth elements spaced one from another by a first linear section and the second sawtooth profile includes a matching plurality of sawtooth members spaced one from another by a second linear section.

Additionally, or alternatively, in this or other non-limiting examples, the first linear section includes a recess receptive of one of the pluralities of sawtooth members.

Additionally, or alternatively, in this or other non-limiting examples, the plurality of sawtooth elements includes a first trapezoidal shape. and the plurality of sawtooth members includes a second trapezoidal shape.

Additionally, or alternatively, in this or other non-limiting examples, one of the first plurality of interlock elements and the first plurality of interlock members includes a first semi-circular profile and the other of the first plurality of interlock elements and the first plurality of interlock members includes a second semi-circular profile that align with the first circular profile to form a plurality of circular openings.

Additionally, or alternatively, in this or other non-limiting examples, a cylindrical insert is arranged in each of the circular openings and welded to both the first and the second pluralities of the interlock elements.

Additionally, or alternatively, in this or other non-limiting examples, the second axially facing surface is welded to the first axially facing surface portion.

An aircraft, in accordance with a non-limiting example, includes a fuselage, an engine arranged in the fuselage, and a drive shaft connected to the engine. The drive shaft includes at first drive shaft section connected to a second drive shaft section by a flexible diaphragm coupler. The flexible diaphragm coupler includes a first flange having a first central support and a first flange element extending radially outwardly from the first central support. The first flange element includes a first rim portion having a first axially facing surface and a second axially facing surface. The second axially facing surface includes a first plurality of interlock elements. A second flange has a second central support axially selectively aligned with the first central support and a second flange element extending radially outwardly from the second central support. The second flange element includes a second rim portion having a first axially facing surface section and a second axially facing surface section. The first axially facing surface section includes a second plurality of interlock elements. A diaphragm member is disposed between the first flange and the second flange. The diaphragm member includes a first diaphragm element connected with a second diaphragm element. The first diaphragm element includes a first central support element and a first disc member extending radially outwardly from the first central support element and the second diaphragm element including a second central support element and a second disc member extending radially outwardly from the second central support element. The first disc member includes a first rim element having a first axially facing surface portion and a second axially facing surface portion. The first axially facing surface portion includes a plurality of interlock members that connect with the first plurality of interlock elements. The second disc member includes a second rim element having a third axially facing surface portion and a fourth axially facing surface portion. The fourth axially facing surface portion includes a second plurality of interlock members that connect with the second plurality of interlock elements.

Additionally, or alternatively, in this or other non-limiting examples, one of the first plurality of interlock elements and the first plurality of interlock members includes a first curvilinear profile and the other of the first plurality of interlock elements and the first plurality of interlock members includes a second curvilinear profile that matches with the first curvilinear profile.

Additionally, or alternatively, in this or other non-limiting examples, the first curvilinear profile comprises a first sinusoidal profile and the second curvilinear profile comprises a second matching sinusoidal profile.

Additionally, or alternatively, in this or other non-limiting examples, one of the first plurality of interlock elements and the first plurality of interlock members includes a first sawtooth profile and the other of the first plurality of interlock elements and the first plurality of interlock members includes a second sawtooth profile that matches with the first sawtooth profile.

Additionally, or alternatively, in this or other non-limiting examples, the first sawtooth profile includes a plurality of sawtooth elements spaced one from another by a first linear section and the second sawtooth profile includes a matching plurality of sawtooth members spaced one from another by a second linear section.

Additionally, or alternatively, in this or other non-limiting examples, the first linear section includes a recess receptive of one of the pluralities of sawtooth members.

Additionally, or alternatively, in this or other non-limiting examples, the plurality of sawtooth elements includes a first trapezoidal shape. and the plurality of sawtooth members includes a second trapezoidal shape.

Additionally, or alternatively, in this or other non-limiting examples, one of the first plurality of interlock elements and the first plurality of interlock members includes a first semi-circular profile and the other of the first plurality of interlock elements and the first plurality of interlock members includes a second semi-circular profile that align with the first circular profile to form a plurality of circular openings.

Additionally, or alternatively, in this or other non-limiting examples, a cylindrical insert is arranged in each of the circular openings and welded to both the first and the second pluralities of the interlock elements.

Additionally, or alternatively, in this or other non-limiting examples, the second axially facing surface is welded to the first axially facing surface portion.

### BRIEF DESCRIPTION OF THE DRAWINGS

The following descriptions should not be considered limiting in any way. With reference to the accompanying drawings, like elements are numbered alike:
FIG. 1 is a perspective glass view of a rotary wing aircraft including drive shafts joined by flexible diaphragm couplers having enhanced damage tolerance, in accordance with a non-limiting example;
FIG. 2 is a perspective side view of the flexible diaphragm coupler including a first welded connection and a second welded connection, in accordance with a non-limiting example;
FIG. 3 is a cross-sectional view of the flexible diaphragm coupler including a first welded connection and a second welded connection disposed radially outwardly of the first welded connection, in accordance with a non-limiting example;
FIG. 4 is a disassembled view of the first welded connection, in accordance with a non-limiting example;
FIG. 5 is an elevational view of the first welded connection of FIG. 4 after welding, in accordance with a non-limiting example;
FIG. 6 is a disassembled view of the first welded connection, in accordance with another non-limiting example;
FIG. 7 is an elevational view of the first welded connection of FIG. 6 after welding, in accordance with another non-limiting example;
FIG. 8 is a disassembled view of the first welded connection, in accordance with still yet another non-limiting example;
FIG. 9 is an elevational view of the first welded connection of FIG. 8 after welding, in accordance with still yet another non-limiting example;
FIG. 10 is a disassembled view of the first welded connection, in accordance with yet still another non-limiting example;
FIG. 11 is an elevational view of the first welded connection of FIG. 10 after welding, in accordance with yet still another non-limiting example;
FIG. 12 is a disassembled view of the first welded connection, in accordance with a further non-limiting example; and
FIG. 13 is an elevational view of the first welded connection of FIG. 12 after welding, in accordance with a further non-limiting example.

### DETAILED DESCRIPTION

A detailed description of one or more embodiments of the disclosed apparatus and method are presented herein by way of exemplification and not limitation with reference to the Figures.

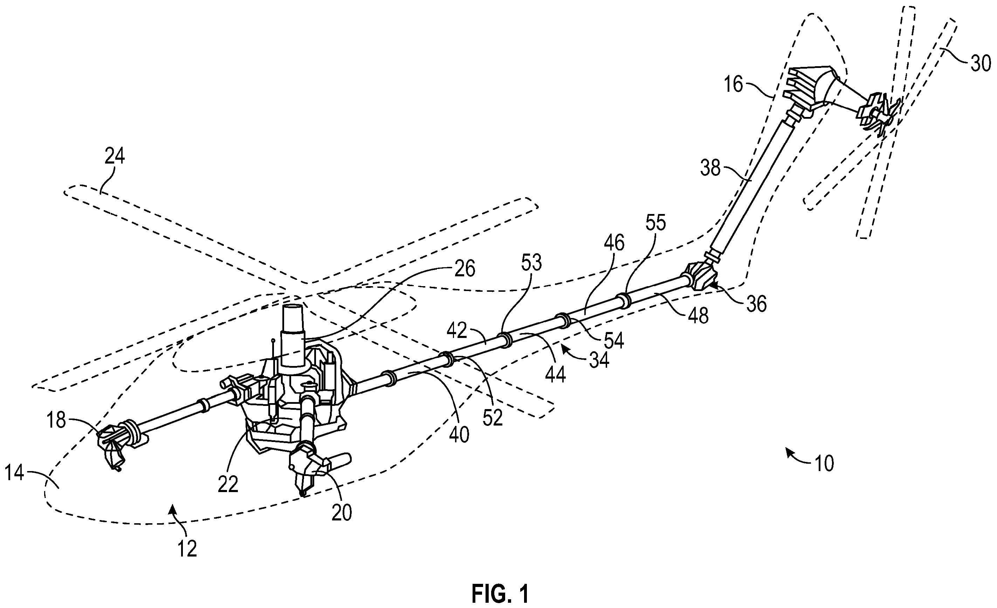

As shown in FIG. 1, a rotary wing aircraft 10, in accordance with a non-limiting example, includes a fuselage 12 including a main cabin/cockpit 14 and a tail 16. Aircraft 10 includes a first engine 18 and a second engine 20 connected to a gearbox 22. A main rotor 24 is connected to gearbox 22 through a main rotor shaft 26. A tail rotor 30 supported on tail 16 is also connected to gearbox 22. That is a tail rotor shaft 34 extends from gearbox 22 to an intermediate gearbox 36 located in tail 16 and a pylon drive shaft 38 extends from intermediate gearbox 36 to tail rotor 30.

A representative tail rotor shaft 34 is formed from a plurality of interconnected drive shaft sections including first drive shaft section 40, a second drive shaft section 42, a third drive shaft section 44, a fourth drive shaft section 46 and a fifth drive shaft section 48. First drive shaft section 40 is connected to gearbox 22 and fifth drive shaft section 48 is connected to intermediate gearbox 36. The drive shaft sections are joined by a plurality of flexible diaphragm coupler couplers. In a non-limiting example, a first flexible diaphragm coupler 52 connected first drive shaft section 40 with second drive shaft section 42, a second flexible diaphragm coupler 53 connects second drive shaft section 42 with third drive shaft section 44, a third flexible diaphragm coupler 54 connects third drive shaft section 44 with fourth drive shaft section 46, and a fourth flexible diaphragm coupler 55 connects fourth drive shaft section 46 with fifth drive shaft section 48.

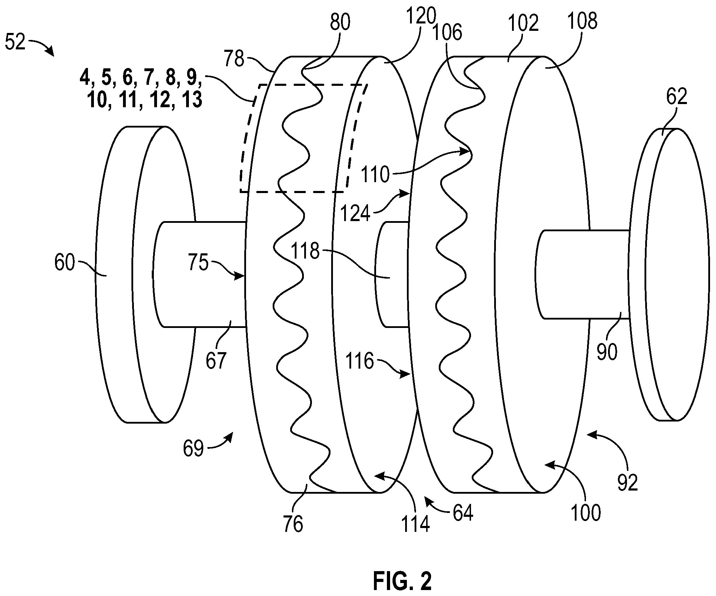

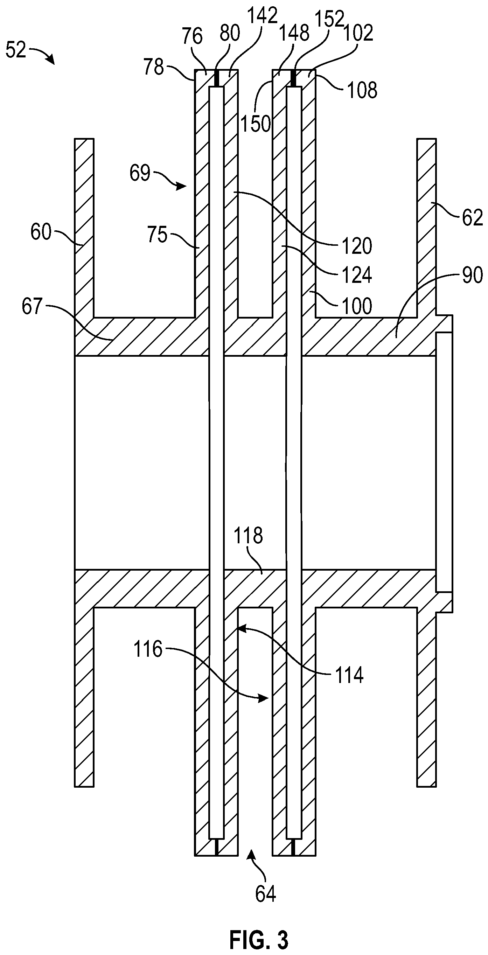

Reference will now follow to FIGS. 2 and 3 in describing first flexible diaphragm coupler 52 with an understanding that second, third, and fourth flexible diaphragm couplers 53-55 include corresponding structure. First flexible diaphragm coupler 52 includes a first flange 60 connected to a second flange 62 through a diaphragm member 64. First flange 60 is connected to first drive shaft section 40 and second flange 62 is coupled to second drive shaft section 42. First flexible diaphragm coupler 52 is designed to accommodate out of axis movement of tail rotor shaft 34. In addition, connections between first flange 60, second flange 62, and diaphragm member 64 are engineered to possess enhanced damage tolerance as will be detailed herein.

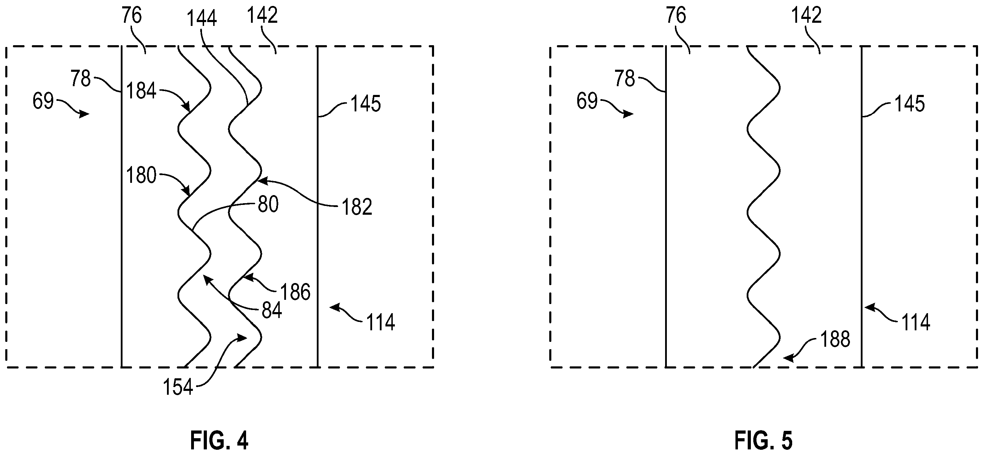

In a non-limiting example, first flange 60 includes a first central support 67 and a first flange element 69. First flange element 69 includes a first disc 75 that extends radially outwardly from central support 67. First disc 75 includes a first rim portion 76 arranged at a radially outermost edge (not separately labeled) of first disc 75. First rim portion 76 includes a first axially facing surface 78 and a second axially facing surface 80. In a non-limiting example, second axially facing surface 80 includes a plurality of interlock elements 84 (FIG. 4) which, as will be detailed more fully herein, connect with diaphragm member 64.

Second flange 62 includes a second central support 90 and a second flange element 92 that is connected to second central support 90. Second flange element 92 includes a second disc 100 that extends radially outwardly from central support 90. Second disc 100 includes a second rim portion 102 arranged at a radially outermost edge (not separately labeled) of second disc 100. Second rim portion 102 includes a first axially facing surface section 106 and a second axially facing surface section 108. In a non-limiting example, first axially facing surface section 106 includes a second plurality of interlock elements (not separately labeled) which, as will be detailed more fully herein, connect with diaphragm member 64.

In a non-limiting example, diaphragm member 64 includes a first diaphragm element 114 connected to a second diaphragm element 116 through a central support element 118. As will be detailed herein, first diaphragm element 114 is connected to first rim portion 76 and second diaphragm element 116 is connected to second rim portion 102. First diaphragm element 114 includes a first disc member 120 that projects radially outwardly from central support element 118. Second diaphragm element 116 includes a second disc member 124 that projects radially outwardly of central support element 118.

As shown in FIG.3, in a non-limiting example, first disc member 120 includes a first rim element 142 arranged at a radially outermost end thereof. First rim element 142 includes a first axially facing surface portion 144 and a second axially facing surface portion 145 (FIG. 4). Second disc member 124 includes a second rim element 148 arranged at a radially outermost end thereof. Second rim element 148 includes a third axially facing surface portion 150 and a fourth axially facing surface portion 152. In a non-limiting example, first axially facing surface portion 144 includes a first plurality of interlock members 154. Fourth axially facing surface portion 152 includes a second plurality of interlock members (not separately labeled).

In a non-limiting example, first plurality of interlock members 154 engage with first plurality of interlock element 84 on second axially facing surface 80 of first rim portion 76. Similarly, the second plurality of interlock member engage with second plurality of interlock elements arranged on second axially facing surface section 108 of second rim portion 102. Once engaged, first rim portion 76 may be welded to first rim element 142 and second rim portion 102 may be welded to second rim element 148. As will be discussed herein, engagement of first plurality of interlock elements 84 and first plurality of interlock member 154 creates a non-linear annular interface that resists crack propagation in the circumferential direction. A similar non-linear interface if formed between second rim portion 102 and second rim element 148.

Reference will now follow to FIG. 4 and 5 in describing the engagement of first plurality of interlock elements 84 and first plurality of interlock member 154 with an understanding that second rim portion 102 and second rim element 148 are engaged in a similar manner. Further, other component interfaces, may include similar features.

In accordance with a non-limiting example, first plurality of interlock elements 84 arranged on second axially facing surface 80 of first rim portion 76 include a first curvilinear profile 180 and first plurality of interlock members 154 arranged in first axially facing surface portion 144 of first rim element 142 includes a second curvilinear profile 182 that matches with first curvilinear profile 180. In a non-limiting example, first curvilinear profile 180 takes the form of a first sinusoidal profile 184 and second curvilinear profile 182 takes the form of a second sinusoidal profile 186. With this arrangement, when first rim portion 76 and first rim element 142 are brought together, second axially facing surface 80 and first axially facing surface portion 144 form a sinusoidal interface 188 (FIG. 5) that may be welded to join first flange 60 with first diaphragm element 114. Note that in other embodiments, curvilinear profile 180 can differ from a pure sinusoidal shape and can have similar dependence with periodic smooth undulations defined by uniformly or non-uniformly distributed curvatures.

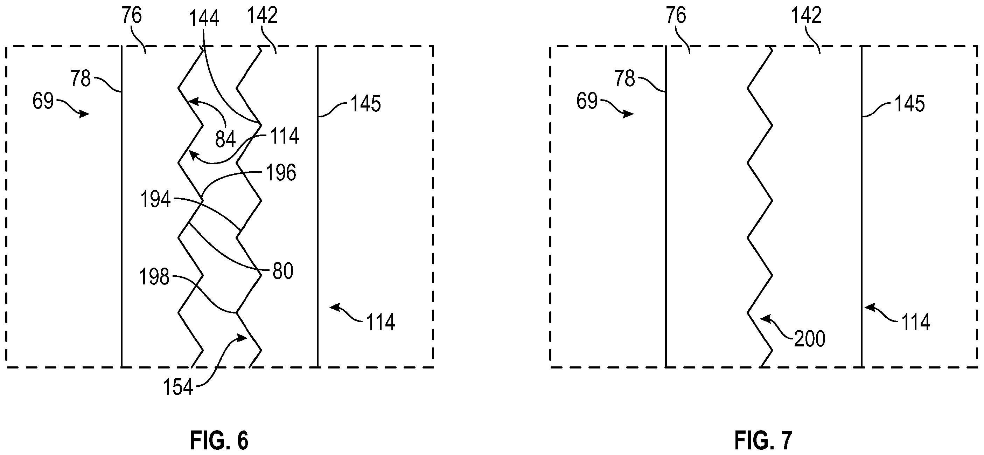

In accordance with another non-limiting example shown in FIGS. 6 and 7, first plurality of interlock elements 84 arranged on second axially facing surface 80 of first rim portion 76 include a first sawtooth profile 192 and first plurality of interlock members 154 arranged in first axially facing surface portion 144 of first rim element 142 includes a second sawtooth profile 194 that matches with first sawtooth profile 192. In a non-limiting example, first sawtooth profile 192 includes a first plurality of sawtooth elements 196 and second sawtooth profile 194 includes a second plurality of sawtooth elements 198. With this arrangement, when first rim portion 76 and first rim element 142 are brought together, second axially facing surface 80 and first axially facing surface portion 144 form a sawtooth interface 200 (FIG. 7) that may be welded to join first flange 60 with first diaphragm element 114.

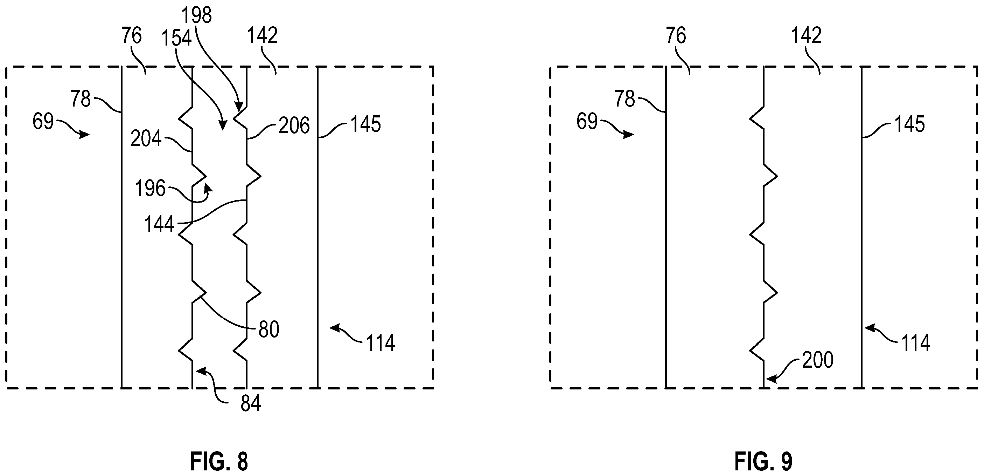

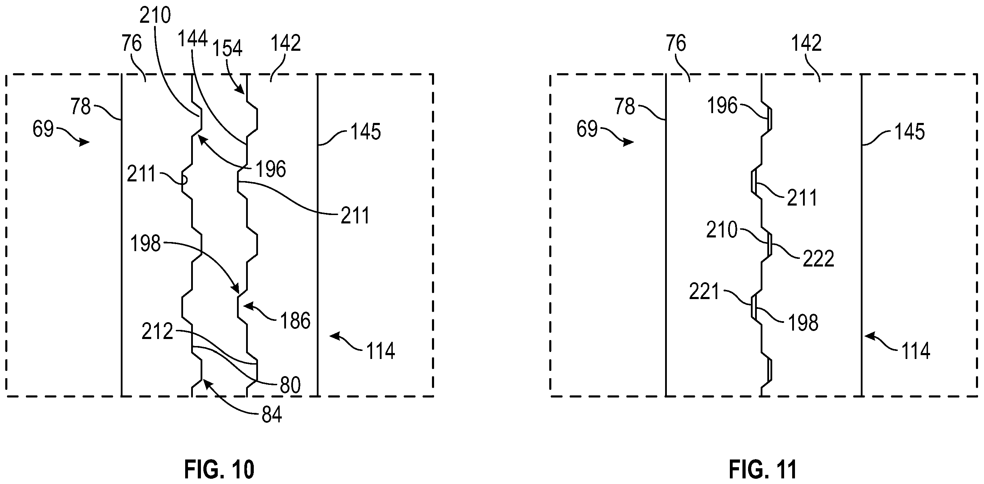

In accordance with a non-limiting example shown in FIGS. 8 and 9, first plurality of sawtooth elements 196 are spaced one from another by a first linear section 204 and each of the second plurality of sawtooth elements 198 are spaced one from another by a second linear section 206. As shown in FIGS. 10 and 11, each of the first plurality of sawtooth elements 196 includes a first trapezoidal profile 210 and each of the second plurality of sawtooth elements 198 includes a second trapezoidal profile 211.

In a non-limiting example shown in FIGS. 10 and 11, a first plurality of recesses such as shown at 212 are receptive of corresponding ones of the second plurality of sawtooth elements 198. A second plurality of recesses 214 is receptive of corresponding ones of the first plurality of sawtooth elements 196. With this arrangement, when first rim portion 76 and first rim element 142 are brought together, a first plurality of voids 221 exist at each of the first plurality of sawtooth elements 196 and a second plurality of voids 222 exist at each of the second plurality of sawtooth elements 198.

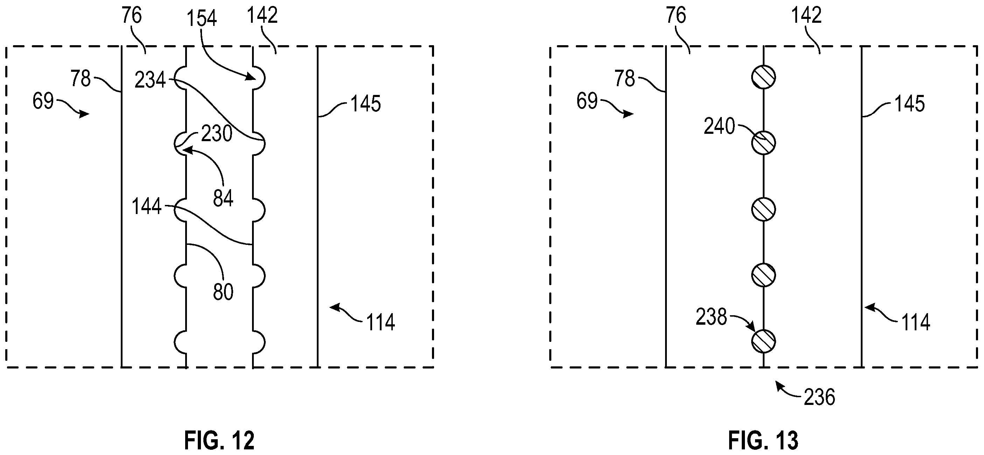

In accordance with another non-limiting example shown in FIGS 12 and 13, first plurality of interlock elements 84 arranged on second axially facing surface 80 of first rim portion 76 include a first semi-circular profile 230 and first plurality of interlock members 154 arranged in first axially facing surface portion 144 of first rim element 142 includes a second semicircular profile 234 that align with the first plurality of interlock elements 84 to form a plurality of circular openings 238 that extend about an interface 236 of first rim portion 76 and first rim element 142. In accordance with a non-limiting example, a cylindrical insert 240 is arranged in each of the circular openings 238 and a weld bead is formed about interface 236.

At this point, it should be understood that an irregular seam or interface established by joining and welding together first rim portion 76 with first rim element 142 inhibits propagation of cracks that may develop as a result of operations stresses. It should also be appreciated that while the irregular interface is described in terms of joining and welding together first rim portion 76 with first rim element 142 each component interface, e.g., first flange 60 and first flange element 69, second flange 62 and second flange element 92, as well as second rim portion 102 and second rim element 148 may include similar features. Further, it should be appreciated that the number of components being joined as described herein may vary.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A flexible diaphragm coupler (52) comprising:
a first flange (60) having a first central support and a first flange element (69) extending radially outwardly from the first central support, the first flange element (69) including a first rim portion having a first axially facing surface and a second axially facing surface, the second axially facing surface including a first plurality of interlock elements;
a second flange (62) having a second central support axially selectively aligned with the first central support and a second flange element (92) extending radially outwardly from the second central support, the second flange element (92) including a second rim portion having a first axially facing surface section and a second axially facing surface section, the first axially facing surface section including a second plurality of interlock elements; and
a diaphragm member (64) disposed between the first flange (60) and the second flange (62), the diaphragm member (64) including a first diaphragm element connected with a second diaphragm element, the first diaphragm element including a first central support element and a first disc member (120) extending radially outwardly from the first central support element and the second diaphragm element including a second central support element and a second disc member (124) extending radially outwardly from the second central support element,
wherein the first disc member (120) includes a first rim element having a first axially facing surface portion and a second axially facing surface portion, the first axially facing surface portion including a plurality of interlock members that connect with the first plurality of interlock elements, and
wherein the second disc member (124) includes a second rim element having a third axially facing surface portion and a fourth axially facing surface portion, the fourth axially facing surface portion including a second plurality of interlock members that connect with the second plurality of interlock elements,
**characterized in that**, one of the first plurality of interlock elements (84) and the first plurality of interlock members (154) includes a first curvilinear profile (180) and the other of the first plurality of interlock elements and the first plurality of interlock members includes a second curvilinear profile (182) that matches with the first curvilinear profile.

2. The flexible diaphragm coupler according to claim 1, wherein the first curvilinear profile (180) comprises a first sinusoidal profile (184) and the second curvilinear profile comprises a second matching sinusoidal profile (186).

3. The flexible diaphragm coupler according to any preceding claim, wherein one of the first plurality of interlock elements and the first plurality of interlock members includes a first sawtooth profile (192) and the other of the first plurality of interlock elements and the first plurality of interlock members includes a second sawtooth profile (194) that matches with the first sawtooth profile.

4. The flexible diaphragm coupler according to claim 3, wherein the first sawtooth profile includes a plurality of sawtooth elements (196) spaced one from another by a first linear section (204) and the second sawtooth profile includes a matching plurality of sawtooth members (198) spaced one from another by a second linear section (206).

5. The flexible diaphragm coupler according to claim 4, wherein the first linear section (204) includes a recess receptive of one of the pluralities of sawtooth members.

6. The flexible diaphragm coupler according to claim 5, wherein the plurality of sawtooth elements includes a first trapezoidal shape (210) and the plurality of sawtooth members includes a second trapezoidal shape (211).

7. The flexible diaphragm coupler according to any preceding claim, wherein one of the first plurality of interlock elements and the first plurality of interlock members includes a first semi-circular profile (230) and the other of the first plurality of interlock elements and the first plurality of interlock members includes a second semi-circular profile (234) that align with the first semi-circular profile to form a plurality of circular openings, and optionally further comprising: a cylindrical insert arranged in each of the plurality of circular openings and welded to both the first and the second pluralities of the interlock elements.

8. The flexible diaphragm coupler according to any preceding claim, wherein the second axially facing surface is welded to the first axially facing surface portion.

9. An aircraft (10) comprising the flexible diaphragm coupler (52) according to claim 1, and further comprising:
a fuselage (12);
an engine (18) arranged in the fuselage;
a drive shaft (38) connected to the engine, the drive shaft including at first drive shaft section (40) connected to a second drive shaft section (42) by said flexible diaphragm coupler (52).

10. The aircraft according to claim 9, wherein one of the first plurality of interlock elements (84) and the first plurality of interlock members includes a first curvilinear profile (180) and the other of the first plurality of interlock elements and the first plurality of interlock members includes a second curvilinear profile (182) that matches with the first curvilinear profile, and optionally wherein the first curvilinear profile comprises a first sinusoidal profile (184) and the second curvilinear profile comprises a second sinusoidal profile (186).

11. The aircraft according to claim 9 or 10, wherein one of the first plurality of interlock elements and the first plurality of interlock members includes a first sawtooth profile (192) and the other of the first plurality of interlock elements and the first plurality of interlock members includes a second sawtooth profile (194) that matches with the first sawtooth profile.

12. The aircraft according to claim 11, wherein the first sawtooth profile includes a plurality of sawtooth elements spaced one from another by a first linear section (204) and the second sawtooth profile includes a plurality of sawtooth members spaced one from another by a second linear section (206).

13. The aircraft according to claim 12, wherein the first linear section includes a recess receptive of one of the pluralities of sawtooth members, and optionally wherein the plurality of sawtooth elements includes a first trapezoidal shape (210), and the plurality of sawtooth members includes a second trapezoidal shape (211).

14. The aircraft according to any of claims 9 to 13, wherein one of the first plurality of interlock elements and the first plurality of interlock members includes a first semi-circular profile (230) and the other of the first plurality of interlock elements and the first plurality of interlock members includes a second semi-circular profile (234) that align with the first semi-circular profile to form a plurality of circular openings, and optionally further comprising: a cylindrical insert arranged in each of the plurality of circular openings and welded to both the first and the second pluralities of the interlock elements.

15. The aircraft according to any of claims 9 to 14, wherein the second axially facing surface is welded to the first axially facing surface portion.

## Patentansprüche

1. Flexible Membrankupplung (52), umfassend:
einen ersten Flansch (60), der eine erste zentrale Stütze und ein erstes Flanschelement (69) aufweist, das sich von der ersten zentralen Stütze radial nach außen erstreckt, wobei das erste Flanschelement (69) einen ersten Randabschnitt mit einer ersten axial ausgerichteten Fläche und einer zweiten axial ausgerichteten Fläche einschließt, wobei die zweite axial ausgerichtete Fläche eine erste Vielzahl von Verriegelungselementen einschließt;
einen zweiten Flansch (62), der eine zweite zentrale Stütze, die axial selektiv mit der ersten zentralen Stütze ausgerichtet ist, und ein zweites Flanschelement (92) aufweist, das sich von der zweiten zentralen Stütze radial nach außen erstreckt, wobei das zweites Flanschelement (92) einen zweiten Randabschnitt mit einem ersten axial ausgerichteten Flächenteil und einem zweiten axial ausgerichteten Flächenteil einschließt, wobei der erste axial ausgerichtete Flächenteil eine zweite Vielzahl von Verriegelungselementen einschließt; und
ein Membranglied (64), das zwischen dem ersten Flansch (60) und dem zweiten Flansch (62) angeordnet ist, wobei das Membranglied (64) ein erstes Membranelement einschließt, das mit einem zweiten Membranelement verbunden ist, wobei das erste Membranelement ein erstes zentrales Stützelement und ein erstes Scheibenglied (120) einschließt, das sich von dem ersten zentralen Stützelement radial nach außen erstreckt, und das zweite Membranelement ein zweites zentrales Stützelement und ein zweites Scheibenglied (124) einschließt, das sich von dem zweiten zentralen Stützelement radial nach außen erstreckt,
wobei das erste Scheibenglied (120) ein erstes Randelement mit einem ersten axial ausgerichteten Flächenabschnitt und einem zweiten axial ausgerichteten Flächenabschnitt einschließt,
wobei der erste axial ausgerichtete Flächenabschnitt eine Vielzahl von Verriegelungsgliedern einschließt, die mit der ersten Vielzahl von Verriegelungselementen verbunden sind, und
wobei das zweite Scheibenglied (124) ein zweites Randelement mit einem dritten axial ausgerichteten Flächenabschnitt und einem vierten axial ausgerichteten Flächenabschnitt einschließt,
wobei der vierte axial ausgerichtete Flächenabschnitt eine zweite Vielzahl von Verriegelungsgliedern einschließt, die mit der zweiten Vielzahl von Verriegelungselementen verbunden sind, **dadurch gekennzeichnet, dass** eine der ersten Vielzahl von Verriegelungselementen (84) und der ersten Vielzahl von Verriegelungsgliedern (154) ein erstes krummliniges Profil (180) einschließt und die andere der ersten Vielzahl von Verriegelungselementen und der ersten Vielzahl von Verriegelungsgliedern ein zweites krummliniges Profil (182) einschließt, das mit dem ersten krummlinigen Profil übereinstimmt.

2. Flexible Membrankupplung nach Anspruch 1, wobei das erste krummlinige Profil (180) ein erstes sinusförmiges Profil (184) umfasst und das zweite krummlinige Profil ein zweites passendes sinusförmiges Profil (186) umfasst.

3. Flexible Membrankupplung nach einem der vorhergehenden Ansprüche, wobei eine der ersten Vielzahl von Verriegelungselementen und der ersten Vielzahl von Verriegelungsgliedern ein erstes Sägezahnprofil (192) einschließt und die andere der ersten Vielzahl von Verriegelungselementen und der ersten Vielzahl von Verriegelungsgliedern ein zweites Sägezahnprofil (194) einschließt, das mit dem ersten Sägezahnprofil übereinstimmt.

4. Flexible Membrankupplung nach Anspruch 3, wobei das erste Sägezahnprofil eine Vielzahl von Sägezahnelementen (196) einschließt, die durch einen ersten linearen Abschnitt (204) voneinander beabstandet sind, und das zweite Sägezahnprofil eine passende Vielzahl von Sägezahngliedern (198) einschließt, die durch einen zweiten linearen Abschnitt (206) voneinander beabstandet sind.

5. Flexible Membrankupplung nach Anspruch 4, wobei der erste lineare Abschnitt (204) eine Aussparung einschließt, die eines der Vielzahl von Sägezahngliedern aufnimmt.

6. Flexible Membrankupplung nach Anspruch 5, wobei die Vielzahl von Sägezahnelementen eine erste trapezförmige Gestalt (210) einschließt und die Vielzahl von Sägezahngliedern eine zweite trapezförmige Gestalt (211) einschließt.

7. Flexible Membrankupplung nach einem der vorhergehenden Ansprüche, wobei eine der ersten Vielzahl von Verriegelungselementen und der ersten Vielzahl von Verriegelungsgliedern ein erstes halbkreisförmiges Profil (230) einschließt und die andere der ersten Vielzahl von Verriegelungselementen und der ersten Vielzahl von Verriegelungsgliedern ein zweites halbkreisförmiges Profil (234) einschließt, das mit dem ersten halbkreisförmigen Profil ausgerichtet ist, um eine Vielzahl von kreisförmigen Öffnungen zu bilden, und optional ferner umfassend: einen zylindrischen Einsatz, der in jeder der Vielzahl von kreisförmigen Öffnungen angeordnet ist und sowohl mit der ersten als auch mit der zweiten Vielzahl der Verriegelungselemente verschweißt ist.

8. Flexible Membrankupplung nach einem der vorhergehenden Ansprüche, wobei die zweite axial ausgerichtete Fläche mit dem ersten axial ausgerichteten Flächenabschnitt verschweißt ist.

9. Flugzeug (10), umfassend die flexible Membrankupplung (52) nach Anspruch 1, und ferner umfassend:
einen Rumpf (12);
ein Triebwerk (18), das im Rumpf angeordnet ist;
eine Antriebswelle (38), die mit dem Triebwerk verbunden ist,
wobei die Antriebswelle einen ersten Antriebswellenabschnitt (40) einschließt, der mit einem zweiten Antriebswellenabschnitt (42) durch die flexible Membrankupplung (52) verbunden ist.

10. Flugzeug nach Anspruch 9, wobei eine der ersten Vielzahl von Verriegelungselementen (84) und der ersten Vielzahl von Verriegelungsgliedern ein erstes krummliniges Profil (180) einschließt und die andere der ersten Vielzahl von Verriegelungselementen und der ersten Vielzahl von Verriegelungsgliedern ein zweites krummliniges Profil (182) einschließt, das mit dem ersten krummlinigen Profil übereinstimmt, und optional wobei das erste krummlinige Profil ein erstes sinusförmiges Profil (184) umfasst und das zweite krummlinige Profil ein zweites sinusförmiges Profil (186) umfasst.

11. Flugzeug nach Anspruch 9 oder 10, wobei eine der ersten Vielzahl von Verriegelungselementen und der ersten Vielzahl von Verriegelungsgliedern ein erstes Sägezahnprofil (192) einschließt und die andere der ersten Vielzahl von Verriegelungselementen und der ersten Vielzahl von Verriegelungsgliedern ein zweites Sägezahnprofil (194) einschließt, das mit dem ersten Sägezahnprofil übereinstimmt.

12. Flugzeug nach Anspruch 11, wobei das erste Sägezahnprofil eine Vielzahl von Sägezahnelementen einschließt, die durch einen ersten linearen Abschnitt (204) voneinander beabstandet sind, und das zweite Sägezahnprofil eine Vielzahl von Sägezahngliedern einschließt, die durch einen zweiten linearen Abschnitt (206) voneinander beabstandet sind.

13. Flugzeug nach Anspruch 12, wobei der erste lineare Abschnitt eine Aussparung einschließt, die eines der Vielzahl von Sägezahngliedern aufnimmt, und optional wobei die Vielzahl von Sägezahnelementen eine erste trapezförmige Gestalt (210) einschließt und die Vielzahl von Sägezahngliedern eine zweite trapezförmige Gestalt (211) einschließt.

14. Flugzeug nach einem der Ansprüche 9 bis 13, wobei eine der ersten Vielzahl von Verriegelungselementen und der ersten Vielzahl von Verriegelungsgliedern ein erstes halbkreisförmiges Profil (230) einschließt und die andere der ersten Vielzahl von Verriegelungselementen und der ersten Vielzahl von Verriegelungsgliedern ein zweites halbkreisförmiges Profil (234) einschließt, das mit dem ersten halbkreisförmigen Profil ausgerichtet ist, um eine Vielzahl von kreisförmigen Öffnungen zu bilden, und optional ferner umfassend: einen zylindrischen Einsatz, der in jeder der Vielzahl von kreisförmigen Öffnungen angeordnet ist und sowohl mit der ersten als auch mit der zweiten Vielzahl der Verriegelungselemente verschweißt ist.

15. Flugzeug nach einem der Ansprüche 9 bis 14, wobei die zweite axial ausgerichtete Fläche mit dem ersten axial ausgerichteten Flächenabschnitt verschweißt ist.

## Revendications

1. Un coupleur à diaphragme flexible (52) comprenant :
une première bride (60) ayant un premier support central et un premier élément de bride (69) s'étendant radialement vers l'extérieur à partir du premier support central, le premier élément de bride (69) comprenant une première partie de rebord comportant une première surface orientée axialement et une seconde surface orientée axialement, la seconde surface orientée axialement comprenant une première pluralité d'éléments d'interverrouillage ;
une seconde bride (62) ayant un second support central aligné axialement de manière sélective avec le premier support central et un second élément de bride (92) s'étendant radialement vers l'extérieur à partir du second support central, le second élément de bride (92) comprenant une seconde partie de rebord comportant une première section de surface orientée axialement et une seconde section de surface orientée axialement, la première section de surface orientée axialement comprenant une seconde pluralité d'éléments d'interverrouillage ; et
un élément de diaphragme (64) disposé entre la première bride (60) et la seconde bride (62), l'élément de diaphragme (64) comprenant un premier élément de diaphragme relié à un second élément de diaphragme, le premier élément de diaphragme comprenant un premier élément de support central et un premier élément de disque (120) s'étendant radialement vers l'extérieur à partir du premier élément de support central, et le second élément de diaphragme comprenant un second élément de support central et un second élément de disque (124) s'étendant radialement vers l'extérieur à partir du second élément de support central,
dans lequel le premier élément de disque (120) comprend un premier élément de jante ayant une première partie de surface orientée axialement et une deuxième partie de surface orientée axialement, la première partie de surface orientée axialement comprenant une pluralité d'éléments d'interverrouillage qui se connectent à la première pluralité d'éléments d'interverrouillage, et
dans lequel le second élément de disque (124) comprend un second élément de jante ayant une troisième partie de surface orientée axialement et une quatrième partie de surface orientée axialement, la quatrième partie de surface orientée axialement comprenant une seconde pluralité d'éléments d'interverrouillage qui se connectent à la seconde pluralité d'éléments d'interverrouillage, **caractérisé en ce que** l'un parmi la première pluralité d'éléments d'interverrouillage (84) et la première pluralité d'éléments d'interverrouillage (154) comprend un premier profil curviligne (180) et l'autre parmi la première pluralité d'éléments interverrouillage et la première pluralité d'éléments d'interverrouillage comprend un second profil curviligne (182) qui correspond au premier profil curviligne.

2. Coupleur à diaphragme flexible selon la revendication 1, dans lequel le premier profil curviligne (180) comprend un premier profil sinusoïdal (184) et le second profil curviligne comprend un second profil sinusoïdal correspondant (186).

3. Coupleur à diaphragme flexible selon l'une quelconque des revendications précédentes, dans lequel l'un de la première pluralité d'éléments d'interverrouillage et la première pluralité d'éléments d'interverrouillage comprend un premier profil en dents de scie (192) et l'autre des premiers éléments d'interverrouillage et la première pluralité d'éléments d'interverrouillage comprend un second profil en dents de scie (194) qui correspond au premier profil en dents de scie.

4. Coupleur à diaphragme flexible selon la revendication 3, dans lequel le premier profil en dents de scie comprend une pluralité d'éléments en dents de scie (196) espacés les uns des autres par une première section linéaire (204) et le second profil en dents de scie comprend une pluralité correspondante d'éléments en dents de scie (198) espacés les uns des autres par une seconde section linéaire (206).

5. Coupleur à diaphragme flexible selon la revendication 4, dans lequel la première section linéaire (204) comprend un évidement pouvant recevoir l'une des pluralités d'éléments en dents de scie.

6. Le coupleur à diaphragme flexible selon la revendication 5, dans lequel la pluralité d'éléments en dents de scie comprend une première forme trapézoïdale (210) et la pluralité d'éléments en dents de scie comprend une seconde forme trapézoïdale (211).

7. Coupleur à membrane flexible selon l'une quelconque des revendications précédentes, dans lequel l'un de la première pluralité d'éléments d'interverrouillage et de la première pluralité d'éléments de d'interverrouillage comprend un premier profil semi-circulaire (230) et l'autre de la première pluralité d'éléments d'interverrouillage et de la première pluralité d'éléments d'interverrouillage comprend un second profil semi-circulaire (234) qui s'aligne avec le premier profil semi-circulaire pour former une pluralité d'ouvertures circulaires, et comprenant en outre, éventuellement : un insert cylindrique disposé dans chacune de la pluralité d'ouvertures circulaires et soudé à la fois à la première et à la seconde pluralité d'éléments d'interverrouillage.

8. Coupleur à membrane flexible selon l'une quelconque des revendications précédentes, dans lequel la seconde surface orientée axialement est soudée à la première partie de surface orientée axialement.

9. Aéronef (10) comprenant le coupleur à diaphragme flexible (52) selon la revendication 1, et comprenant en outre :
un fuselage (12) ;
un moteur (18) disposé dans le fuselage ;
un arbre d'entraînement (38) relié au moteur, l'arbre d'entraînement comprenant une première section d'arbre d'entraînement (40) reliée à une seconde section d'arbre d'entraînement (42) par ledit coupleur à diaphragme flexible (52).

10. Aéronef selon la revendication 9, dans lequel l'un de la première pluralité d'éléments d'interverrouillage (84) et de la première pluralité d'éléments d'interverrouillage comprend un premier profil curviligne (180) et l'autre élément de la première pluralité d'éléments d'interverrouillage et de la première pluralité d'éléments d'interverrouillage comprend un second profil curviligne (182) qui correspond au premier profil curviligne, et dans lequel, éventuellement, le premier profil curviligne comprend un premier profil sinusoïdal (184) et le second profil curviligne comprend un second profil sinusoïdal (186).

11. Aéronef selon la revendication 9 ou 10, dans lequel l'un de la première pluralité d'éléments d'interverrouillage et la première pluralité d'éléments d'interverrouillage comprend un premier profil en dents de scie (192) et l'autre des premiers éléments d'interverrouillage et la première pluralité d'éléments d'interverrouillage comprend un second profil en dents de scie (194) qui correspond au premier profil en dents de scie.

12. Aéronef selon la revendication 11, dans lequel le premier profil en dents de scie comprend une pluralité d'éléments en dents de scie espacés les uns des autres par une première section linéaire (204) et le second profil en dents de scie comprend une pluralité d'éléments en dents de scie espacés les uns des autres par une seconde section linéaire (206).

13. Aéronef selon la revendication 12, dans lequel la première section linéaire comprend un évidement pouvant recevoir l'une des pluralités d'éléments en dents de scie, et dans lequel, éventuellement, la pluralité d'éléments en dents de scie comprend une première forme trapézoïdale (210), et la pluralité d'éléments en dents de scie comprend une seconde forme trapézoïdale (211).

14. Aéronef selon l'une quelconque des revendications 9 à 13, dans lequel l'un de la première pluralité d'éléments d'interverrouillage et de la première pluralité d'éléments d'interverrouillage comprend un premier profil semi-circulaire (230) et l'autre de la première pluralité d'éléments d'interverrouillage et de la première pluralité d'éléments d'interverrouillage comprend un second profil semi-circulaire (234) qui s'aligne avec le premier profil semi-circulaire pour former une pluralité d'ouvertures circulaires, et comprenant en outre, éventuellement : un insert cylindrique disposé dans chacune de la pluralité d'ouvertures circulaires et soudé à la fois à la première et à la seconde pluralité d'éléments d'interverrouillage.

15. Aéronef selon l'une quelconque des revendications 9 à 14, dans lequel la seconde surface orientée axialement est soudée à la première partie de surface orientée axialement.
